# EUROPEAN PATENT SPECIFICATION

(11) **EP 1 870 269 B1**
(45) Date of publication and mention of the grant of the patent: **17.09.2008**
(21) Application number: 06012974.9
(22) Date of filing: 23.06.2006
(51) Int. Cl.: B60G 21/00, B62D 9/02, B60G 7/00

(54) **A suspension tilting module for a wheeled vehicle and a wheeled vehicle equipped with said suspension tilting module**
Fahrwerksneigemodul für Radfahrzeuge und mit einem solchen Modul ausgestattetes Radfahrzeug
Module de châssis basculant et véhicule équippé avec un tel module

(43) Date of publication of application: 26.12.2007
(73) Proprietor: Fondazione Torino Wireless, 10129 Torino (IT); POLITECNICO DI TORINO, 10129 Torino (IT)
(72) Inventor: Carabelli, Stefano, 10054 Cesana Torinese (TO) (IT); Tonoli, Andrea, 10051 Avigliana (TO) (IT); Festini, Andrea, 10093 Collegno (TO) (IT); Cavalli, Fabio, 15100 Alessandria (AL) (IT)
(74) Representative: Grünecker, Kinkeldey, Stockmair & Schwanhäusser Anwaltssozietät

(56) References cited:
- EP-A1- 0 528 783
- WO-A-81/00088
- DE-C1- 19 619 644
- DE-C1- 19 717 418
- GB-A- 2 310 838
- US-A- 2 260 102

## Description

### FIELD OF THE PRESENT INVENTION

The present invention relates to the field of automotive applications. In particular, the present invention relates to a suspension tilting module for wheeled vehicles and a wheeled vehicle equipped with such a suspension tilting module. In more detail, the present invention relates to a suspension tilting module allowing at least two wheels of a vehicle disposed on a common axle to be tilted together with the whole body of the vehicle. Still in more detail, the present invention relates to a suspension tilting module allowing both tilting and vertical displacement of said two wheels. Furthermore, the present invention relates to a suspension tilting module allowing to adequately absorb shocks to which one or both of said two wheels are subjected, for instance, when one or both of said two wheels crosses a bump. Still in more detail, the present invention relates to a suspension tilting module equipped with hydraulic actuating means adapted to provide the torque needed for the tilting function. Finally, the present invention relates to a tilting module equipped with hydraulic actuating means exerting a torque on a tilting arm pivotally connected to a rigid frame which is in turn adapted to be firmly fixed to the chassis of the vehicle.

### DESCRIPTION OF THE PRIOR ART

Over the past few years, an interest has grown towards vehicles with innovative configurations due to the increasing number of vehicles and the related problems of traffic congestion and pollution. Such vehicles are usually of small weight and size to minimize the parking problems and reduce the losses due to the rolling resistance and aerodynamic drag. In particular, the size of these vehicles is normally designed for one or two people, thus allowing personal mobility; moreover, the small size and weight of these vehicles allows for the reduction of the engine power and, accordingly, the emissions without compromising the performance. In particular, over the past years, many efforts have been devoted by the car manufacturers to the development of so-called tilting vehicles, namely of vehicles wherein all or part of the vehicle is inclined inward during cornering so that the resultant of the gravity and the centrifugal forces is kept oriented along the vertical body axis of the vehicle. In other words, tilting vehicles are characterized by the capacity to bank over to the side like a motorbike. Accordingly, rollover can be avoided even if the track of the tilting vehicle is narrow with respect to that of conventional vehicles.

Several tilting vehicles have been proposed in the past with three or more wheels. In some three wheeled vehicles, the tilting is given just to the body and the central wheel while the axis with two wheels does not tilt. On the contrary, in other cases, the solution is preferred according to which all wheels tilt with the body, since this solution allows to obtain improved performances concerning the dynamic of the vehicle.

Examples of tilting vehicle can be found in each of documents GB231083A, US2260102A, DE197174 8C and DE19619644C, where GB 231083 A forms the closest prior art according to the preamble of claim 1.

However, in spite of all the advantages offered by tilting vehicles, the further development of these vehicles has revealed that several problems have still to be solved and/or overcome. The tilting vehicles known in the art may be classified in essentially two categories, namely vehicles with manual tilting and vehicles where the tilting function is carried out by adequate actuating means driven by a control system. In "manual" tilting vehicles, the tilting command to the suspension system is provided by the driver; on the contrary, in the case of actuating means, the tilting function is exploited by tilting actuators following a command of the driver and/or under the control of a control system adapted to collect information or data relating to either the driving conditions and/or the behavior of the vehicle and to generate corresponding commands which are then sent to the actuators. In particular, "active" tilting vehicles usually comprise a tilting suspension module and/or system wherein moving suspension elements are connected to a tilting actuator so that the motion of the tilting actuator controls the amount of tilting imposed on the vehicle. Moreover, a control system sends commands to the tilting actuator, with said commands being generated as a function of information relating to either the driving condition and/or the behavior of the vehicle collected by said control system.

However, providing tilting actuating means and/or devices adapted to adequately carry out the tilting function has revealed to be a very difficult task. For this reason, several actuating means have been proposed in the prior art. For instance, electromechanical actuating means have been proposed essentially based on electric motors mechanically coupled to a tilting mechanism by means of mechanical transmission means such as, for instance, transmission belts, mechanically interposed between one or more electric motors and a reduction gear. In this case, the tilting torque can be easily controlled by controlling the electrical current supplied to the electric motor whilst the mechanical gearbox is used to amplify the motor output torque.

Although there are evident advantages offered by electromechanical actuating means, it has to be appreciated that said electromechanical actuating means are still affected by several drawbacks. For instance, when a large reduction ratio is required between the rotational displacement of the electric motor and the rotational displacement of the reduction gear, the overall dimensions and the volume of said reduction gear increase drastically, so that it becomes difficult to conveniently position said reduction gear inside the vehicle. Accordingly, it becomes difficult to obtain a convenient layout of the vehicle. Moreover, due to the mechanical link between the electric motor and the tilting mechanism, the electric motor and the reduction gearbox have to be positioned into proximity of the tilting mechanism resulting in the total allowable tilting angle being limited and/or reduced, so that the tilting function may in some cases be not as satisfactory as required. Furthermore, a further drawback affecting the tilting vehicles equipped with an electromechanical tilting system relates to the fact that the overall mass and weight of the vehicle drastically increases, resulting in the tilting function being slowed down so that the vehicle is not tilted as quickly as required with corresponding problems arising, for instance in the case of emergency situations. Moreover, a friction arises in the mechanical reduction gearbox, resulting in the efficiency of the actuating means being reduced and electric motors with increased performances (and, therefore, with increased overall dimensions and weight) being required. Moreover, the mechanical transmission may generate noise and/or vibrations resulting in a decreased driving comfort for the driver. Finally, due to the overall dimensions and weight of the known electromechanical actuating means, it becomes impossible to provide emergency actuating means adapted to provide the needed actuating torque in the case of failure of the main actuating means so that the vehicle no longer behaves as a tilting vehicle, for instance in the case in which the supply of electrical current to the electric motors is interrupted. Finally, regular inspections and/or maintenance operations are needed for the purpose of checking the mechanical transmissions, thus resulting in increasing overall maintenance costs for the vehicle.

Accordingly, in view of the problems and/or drawbacks identified above, it would be highly convenient to provide a suspension tilting module allowing to overcome the drawbacks affecting the prior art tilting solutions. In particular, it is an object of the present invention to provide a suspension tilting module for a wheeled vehicle allowing to overcome the problems affecting the prior art tilting modules and/or systems of the kind equipped with electromechanical actuating means. A further object of the present invention is that of providing a suspension tilting module equipped with actuating means which do not require any mechanical link between the power source providing the tilting torque and the tilting mechanism. Still another object of the present invention is that of providing a suspension tilting module equipped with actuating means comprising a power source adapted to provide the tilting torque wherein said power source may be positioned and/or disposed at some distance from the suspension module, thus allowing to improve the overall layout of the vehicle implementing this suspension tilting module. Still a further object of the present invention is that of providing a suspension tilting module equipped with actuating means with reduced overall dimensions and weight, in particular, with overall dimensions and weight which are less than those of electromechanical actuating means. Another object of the present invention is that of providing a suspension tilting module equipped with actuating means generating a reduced friction, in particular a friction which is less than that arising in the case of electromechanical actuating means. Still a further object of the present invention is that of providing a suspension tilting module equipped with actuating means allowing said suspension tilting module to be transformed in a manually actuated suspension tilting module. Moreover, a further object of the present invention is that of providing a suspension tilting module equipped with a redundant actuating system, namely an actuating system comprising main actuating means and emergency actuating means, wherein said emergency actuating means may start working in the case of failure of the main actuating means. A further object of the present invention is that of providing a suspension tilting module equipped with active actuating means of reduced dimension, complexity and weight and adapted to work not only to brake the tilting system but also to actively carry out the tilting function.

### SUMMARY OF THE INVENTION

To this end, according to the present invention, this is obtained by providing a suspension tilting module equipped with hydraulic actuating means adapted to actively exploit the tilting function, that is, hydraulic actuating means adapted to provide the tilting torque needed for tilting the suspension system.

In particular, according to a first embodiment of the present invention, a suspension tilting module as claimed in claim 1 is provided, namely a suspension tilting module for a wheeled vehicle comprising at least two wheels disposed on a common axle, said module comprising a suspension system adapted to support said at least two wheels allowing tilting of said at least two wheels, said module comprising a rigid frame adapted to be firmly fixed to the chassis of said vehicle and pivotally supporting a tilting arm, said module further comprising hydraulic actuating means pivotally interposed between said rigid frame and said tilting arm, so that activation of said hydraulic actuating means results in a force being exerted on said tilting arm and said rigid frame being tilted together with said at least two wheels, wherein said tilting arm comprises at least a first and a second arm portion and in that said hydraulic actuating means comprise at least a first hydraulic actuator adapted to exert a force on said first arm portion, and a second hydraulic adaptor adapted to exert a force on said second arm portion.

Still according to another embodiment of the present invention, a suspension tilting module as claimed in claim 54 is provided, namely a suspension tilting module I wherein said at least first hydraulic actuator comprises an hydraulic cylinder.

According to still a further embodiment of the present invention, a suspension tilting module as claimed in claim 9 is provided, namely a module further comprising at least one hydraulic pump hydraulically connected to said hydraulic actuating means.

According to further another embodiment of the present invention, a suspension tilting module as claimed in claim 11 is also provided, namely a suspension tilting module further comprising at least one electric motor adapted to drive said at least one hydraulic pump.

Still according to a further embodiment of the present invention, a suspension tilting module as claimed in claim 14 is also provided, namely a suspension tilting module wherein said tilting arm is pivotally connected to a first shock absorber and a second shock absorber through pivotable connections, respectively,

According to the present invention, there is also provided a driving tilting suspension system as claimed in claim 19, namely a driving tilting suspension system comprising a suspension tilting module as claimed in one of claims 1 to 18 along with two wheels rotatably connected to said module.

According to a further embodiment of the present invention, a driving tilting suspension system as claimed in claim 20 is further provided, namely a driving tilting suspension system further comprising at least one electronic control unit adapted to collect data relating to the driving condition and/or the behavior of said vehicle and to emit electrical signals as a result of the collected data.

According to another embodiment of the present invention, a wheeled vehicle is provided as claimed in claim 24, namely a vehicle comprising at least two wheels, said vehicle being equipped with a driving tilting suspension system as claimed in one of claims 19 to 23.

Further embodiments, features or details of the present invention are defined in the dependent claims.

### BRIEF DESCRIPTION OF THE DRAWINGS

In the following, a description will be given with reference to the drawings of particular and/or preferred embodiments of the present invention; it has, however, to be noted that the present invention is not limited to the embodiments disclosed but that the embodiments disclosed only relate to particular examples of the present invention, the scope of which is defined by the appended claims. In particular, in the drawings:
figure 1 relates to a schematic exploited view of a first embodiment of the suspension tilting module and the tilting suspension system according to a first embodiment of the present invention;
figure 2 relates to a front view of the embodiment of the present invention depicted in figure 1;
figure 3 relates to a rear view of the embodiment of the present invention depicted in figure 1;
figure 4 relates to a schematic front view of the embodiment of the present invention depicted in figure 1 when tilted at a predefined angle;
figure 5 relates to a schematic front view of the embodiment of the present invention depicted in figure 1, showing the behavior of this embodiment when one of the wheels is subjected to a vertical displacement;
figure 6 relates to a schematic view of the overall electrical mechanical an hydraulic layout of one embodiment of the suspension tilting module and the tilting driving suspension system according to the present invention;
figure 7 relates to a schematic exploited view of a four wheeled vehicle equipped with two suspension tilting modules and tilting driving suspension systems according to the present invention; and
figure 8 relates to a schematic exploited view of a three wheeled vehicle implementing one suspension tilting module and one tilting driving suspension system according to the present invention.

### DETAILED DESCRIPTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather that the described illustrative embodiments merely exemplify the various aspects of the present invention, the scope of which is defined by the appended claims.

As apparent from the disclosure given above, the present invention is understood to be particularly advantageous when used for applications in the automotive field; in particular, the present invention is understood to be particularly advantageous when applied to the steering wheels of a vehicles. For this reason, examples with be given in the following in which corresponding embodiments of the tilting module and/or system according to the present invention as described in combination with steering wheels. However, it has to be noted that the present invention is not limited to the particular case of a tilting module and system for steering wheels but can be used in any other situation in which two wheels of a vehicle disposed on a common axle need to be tilted. Accordingly, it will become apparent from the following disclosure that the present invention may also be used for automotive applications in which, for instance, the steering wheels are not tilted. Moreover, even if those examples of wheeled vehicles disclosed in the present application and implementing the present invention mostly relates to cars driven by a main combustion engine, it has to be understood that the possible implementations of the tilting module and system according to the present invention are not limited to this kind of vehicles; on the contrary, the tilting module and system according to the present invention may also be conveniently implemented in different vehicles such as, for instance, tracks, trains, tractors or the like.

The present invention is based on the principle that adequate tilting can be conveniently obtained by active hydraulic actuating means adapted to generate the torque needed for tilting the vehicle. In particular, the present invention is based on the principle that hydraulic actuating means may be used instead of mechanical and/or electromechanical actuating means for the purpose of generating the required tilting torque. In more detail, the present invention is based on the principle that if said hydraulic actuating means are used in combination with an electric motor and an electric pump, with said electric motor driving said hydraulic pump and with said hydraulic pump driving said hydraulic actuating means, said hydraulic actuating means may be used to multiply the torque provided by the electric motor in order to obtain the required tilting torque. Accordingly, the proposed solution exploits the large reduction ratios that can be obtained by hydraulic systems. Moreover, the tilting force or torque may be controlled by the electric motor torque, without any need of any servo valve; accordingly, the system is adapted to work with a fixed volume of hydraulic fluid so that a fluid reservoir is needed only for the purpose of compensating the unavoidable leakages. Furthermore, the system may be regarded as a by-wire system, since all the functions of the system may be controlled by a electronic control unit and a power electronic unit, in combination, with said electronic control unit being adapted to collect data relating to the driving conditions and/or the behavior of the vehicle and to provide said power electronic unit with corresponding signals allowing said power electronic units to drive the electric motor and, accordingly, the overall tilting actuating system. Moreover, if an isolation valve is used, this isolation valve may be used to isolate the hydraulic actuators from the rest of the actuating means (for instance, from the hydraulic pump) so that the active tilting module can be transformed in a manually actuated tilting module. Moreover, isolating the hydraulic actuators from the hydraulic pump by means of the isolation valve also allows to block the tilting module at a predefined position so as to avoid any tilting of the module which is, therefore, transformed in a fixed, non-tilting suspension module.

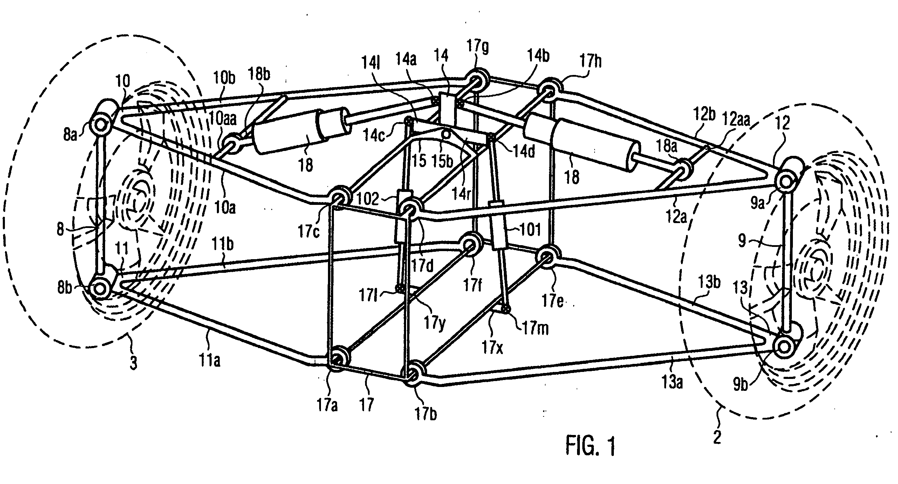

In the following with reference to figure 1, a first embodiment of the tilting module and system according to the present invention will be described.

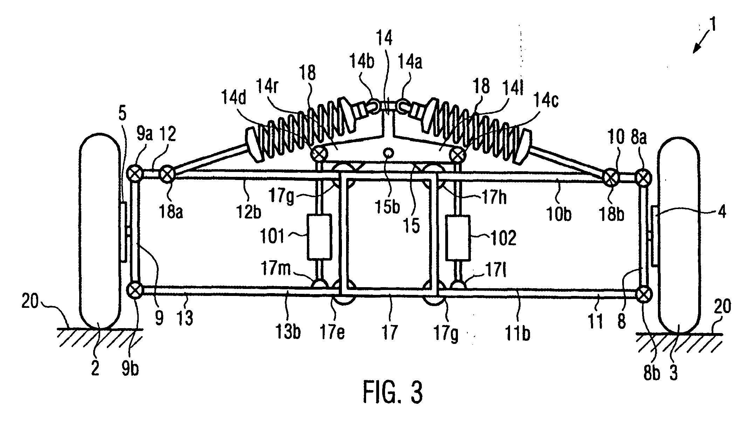

As apparent from figures 1, 2 and 3, the tilting module and system depicted therein comprise a suspension structure or system defined by a rigid frame 17 and four suspension wishbone arms 10, 11, 12 and 13. In particular, said suspension structure comprises a first upper wishbone arm 12 defined by a front wishbone portion 12a and a rear wishbone portion 12b (see in particular figure 3). In the same way, the suspension structure comprises a first lower wishbone arm 13 defined by a front wishbone portion 13a and a rear wishbone portion 13b. Similarly, the suspension structure comprises a second upper wishbone arm 10 defined by a front wishbone portion 10a and a rear wishbone portion 10b (see figure 3). Moreover, the suspension structure comprises a second lower wishbone arm 11 defined by a front wishbone portion 11 a and a rear wishbone portion 11 b. The front wishbone portions 12a and 13a of the first upper arm 12 and the first lower arm 13, respectively, are pivotally connected to the rigid frame 17 through pivotable connections 17d and 17b, respectively. In the same way, the front wishbone portions 10a and 11 a of the second upper arm 10 and the second lower arm 11, respectively, are pivotally connected to the rigid frame 17 through pivotable connections 17c and 17a, respectively. The rear wishbone portions 13b and 11 b of the first lower arm 13 and the second lower arm 11, respectively, are pivotally connected to the rigid frame 17 through pivotable connections 17e and 17f, respectively. The rigid frame 17 pivotally supports a tilting arm 14; in particular, as depicted in figure 1, said tilting arm 14 is pivotally connected to a bridge portion 15 of the rigid frame 17 through a pivotable connection 15b. Moreover, said tilting arm 14 comprises a T-shaped arm (the shape of a reversed T) with a first tilting arm portion 14l and a second tilting arm portion 14r. A third tilting arm portion extends from said first and second tilting arm portions 14l and 14r in a direction substantially perpendicular to said first and second tilting arm portions 14l and 14r. Hydraulic actuating means 102 and 101 are pivotally interposed between the tilting arm 14 and the rigid frame 17. In particular, as apparent from figures 1, 2 and 3, first hydraulic actuating means 102 are pivotally interposed between the first tilting arm portion 14l and the rigid frame 17, with said first hydraulic actuating means 102 being pivotally connected to both said first tilting arm portion 14l and an extension portion 17y of the rigid frame 17 through pivotable connections 14c and 17l, respectively. In the same way, second hydraulic actuating means 101 are pivotally connected to both the second tilting arm portion 14r of the tilting arm 14 and to an extension portion 17x of the rigid frame 17 through pivotable connections 14d and 17m, respectively.

By way of example, said first and second hydraulic actuating means 102 and 101 may comprise first and second hydraulic cylinders, respectively, for instance single effect hydraulic cylinders, namely hydraulic cylinders adapted to exert a force only along a unique predefined direction. Alternatively, said first and second hydraulic cylinders 102 and 101 may comprise double effect hydraulic cylinders namely hydraulic cylinders adapted to exert a force along a first predefined direction and along a second predefined direction substantially contrary said first predefined direction. When double effect hydraulic cylinders selected, a unique hydraulic double effect cylinder may be used, for instance the first hydraulic cylinder 102 depicted in figures 1, 2 and 3; in this case, the tilting arm 14 may have an L-shaped portion with a first tilting arm portion pivotally connected to said unique hydraulic double effect cylinder 102 through a pivotable connection 14c and a second portion extending substantially perpendicularly from said first tilting arm portion 14l.

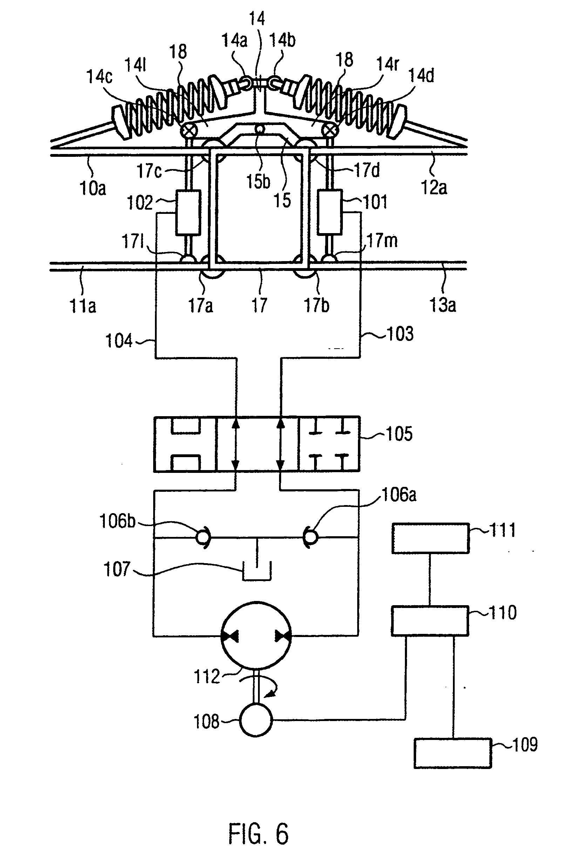

The hydraulic actuating means 102 and 101 may be actuated by means of a pump, for instance a "fixed displacement hydraulic pump" driven by one or more electric motors. Whilst a detailed description of the electromechanical layout of the tilting module and system according to the present invention will be given in the following with reference to figure 6, it may be appreciated at this stage of the description that actuating one or both of the hydraulic actuating means 102 and 101 results in a torque being exerted on the tilting arm 14, with the rigid frame 17 being tilted with respect to the tilting arm 14, resulting therefore in the whole tilting module being tilted together with the two wheels 2 and 3 pivotally supported by said tilting module. Moreover, since in the most common implementations of the tilting module and system according to the present invention in a vehicle the rigid frame 17 is firmly fixed to the chassis of the vehicle, tilting of the rigid frame 17 also results in the whole vehicle being tilted.

The suspension structure system of the tilting module of the present invention according to the embodiment depicted in figures 1, 2 and 3 further comprises two shock absorbers 18 pivotally connected to both the tilting arm or crank 14 and to the upper wishbone arms 10 and 12. In particular, as depicted in figure 1, a first shock absorber 18 is pivotally connected to the actuating crank 14 through a pivotable connection 14a and to a bridged portion 10aa of the second upper arm 10 through a pivotable connection 18b, with said bridged portion 10aa being rigidly interposed between the front wishbone portion 10a and the rear wishbone portion 10b of the second upper wishbone arm 10. In the same way, a second shock absorber 18 is pivotally connected to both the tilting arm or crank 14 through a pivotable connection 14b and the bridged portion 12aa of the first upper arm 12 through a pivotable connection 18a, with said bridged portion 12aa being rigidly interposed between the front wishbone portion 12a and the rear wishbone portion 12b of the first upper wishbone arm 12. The reason why, in the embodiment depicted in figures 1, 2 and 3, bridged portions 10aa and 12aa of the second upper wishbone arm 10 and the first upper wishbone arm 12, respectively, are used for the purpose of pivotally connecting the two shock absorbers 18 to the suspension system or structure relates to the fact that in the embodiment depicted in figures 1, 2 and 3, the bridge portion 15 of the tilting frame 17 (and, accordingly, the tilting arm 14) is provided in the central portion of the rigid frame 17 along a direction perpendicular to said bridged portion 15. However, other solutions are also possible, for instance solutions according to which the two shock absorbers are pivotally connected to either the rear or front wishbone portions of the first and second upper wishbone arms 12 and 10. For instance, by placing the bridge portion 15 (and, accordingly, the tilting arm 14) at the rear portion of the rigid frame (in proximity of the pivotable connections 17g and 17h), the two shock absorbers 18 may be then pivotally connected directly to the rear wishbone portions 12b and 10b of the first and second wishbone arms 12 and 10, respectively. In the same way, by placing the wishbone portion 15 (and, accordingly, the tilting arm 14) at the front portion of the rigid frame 17 (for instance in proximity of the pivotable connections 17c and 17d) it would be possible to pivotally connect the two shock absorbers 18 directly to the front wishbone portions 12a and 10a of the first and second upper wishbone arms 12 and 10, respectively. ok

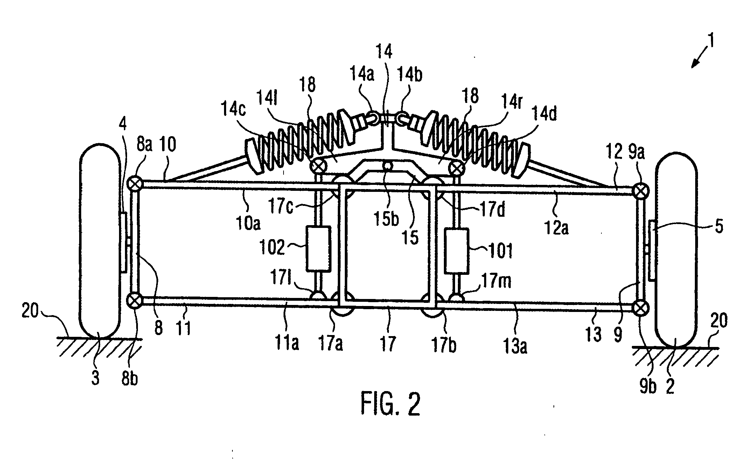

The suspension structure further comprises a first steering arm or upright 9 adapted to rotatably support a first wheel 2, as well as a second steering arm or upright 8 adapted to rotatably support a second wheel 3. The first upright 9 is supported by the first upper arm 12 and the first lower arm 13. In particular, the first upright 9 is pivotally connected to the first upper and lower arms 12 and 13 through pivotable connections 9a and 9b, respectively. In the same way, the second upright 8 is supported by the second upper arm 10 and the second lower arm 11; in particular, the second upright 8 is pivotally connected to the second upper arm 10 an the second lower arm 11 through pivotable connections 8a and 8b, respectively. The pivotable connections 9a, 9b, 8a and 8b allow both steering and tilting of the two wheels 2 and 3. Two motors 4 and 5 may be received in the hubs of the wheels 3 and 2, respectively (see figures 2 and 3); moreover, brake disks (not depicted in the drawings) may be provided on the wheels 2 and 3. Providing driving motors (for instance, electric driving motors) in the hubs of the wheels 2 and 3 allows to improve the driving performance of the vehicle; moreover, at it will become apparent from the following disclosure, disposing driving motors in the hubs of the wheels does not limit the tilting angle. However, the tilting module and system according to the present invention are also adapted to be implemented in vehicles driven by a main engine, for instance a combustion engine disposed remotely from the tilting module and system.

In the following, a description will be given with reference to figure 6 of a possible electromechanical layout of a tilting system according to the present invention implementing the tilting module of figure 1; in figure 6, those features already described above with reference to previous figures are identified by the same reference numerals. Moreover, some features of the tilting module of figures 1, 2 and 3 have been omitted in figure 6 for reasons of clarity.

As apparent from figure 6, the suspension tilting system depicted therein comprises the suspension tilting module (partially depicted) of figures 1, 2 and 3. Moreover, in figure 6, reference numeral 112 identifies a hydraulic machine, for instance a reversible hydraulic pump, hydraulically connected to the hydraulic actuating means 102 and 101 through corresponding pipes 104 and 103, respectively. Moreover, an electric motor 108 is coupled to the hydraulic pump 112 so as to drive said hydraulic pump 112. A reservoir 107 is further provided for the purpose of containing a hydraulic fluid needed for the system; however, it has to be noted that the system can work with a fixed volume of fluid so that the reservoir 107 is needed just for compensating the unavoidable leakages. A pair of check valves 106b and 106a are hydraulically interposed between the hydraulic pipes 104 and 103 to ensure compensation of the leaks as well as of the asymmetries in the volume of liquid required by the hydraulic actuating means 102 and 101. Moreover, the two check valves 106b and 106a help to keep the intake port of the pump 112 at the pressure of the reservoir 107. Furthermore, an isolation valve 105 is also provided between the hydraulic pump 112 and the hydraulic actuating means 102 and 101, with said isolation valve allowing to close the intakes of the hydraulic actuating means 102 and 101, thus connecting directly the two sides of the pump, resulting in the electric motor 108 turning idle. Finally, as depicted in figure 6, the electric motor 108 is driven by one power electronic unit 110 working under the control of an electronic control unit 111; moreover, a battery pack is provided, with said battery pack 109 being electrically connected to the power electronic unit 110 which is in turn electrically connected to both the electronic control unit 111 and the electric motor 108 as depicted in figure 6.

When the system operates under normal conditions, the electric motor 108 provides torque to the hydraulic pump 112 under the control of the power electronic power units 110 and the electronic control unit 111. For instance, to this end, the electronic control unit 111 may be conceived so as to be adapted to collect data relating to the behavior of the vehicle and/or the driving conditions (such as, for instance, data relating to the speed of the vehicle or the lateral acceleration in case of turning or lateral wind or the like) and to supply corresponding signals to the power electronic unit 110 as a function of the data collected. In this way, the electric motor 108 may be adequately driven by the power electronic unit 110; for instance, the electric motor 108 may be driven so as to provide a predefined torque to the hydraulic pump, resulting in a predefined torque being exerted by the hydraulic actuating means 102 and 101 on the tilting arm 14. In the same way, the rotational speed of the motor may be controlled, resulting in the hydraulic pump being also driven at a predefined rotational speed so as to obtain a predefined actuation speed of one or both of the hydraulic means 102 and 101. The torque produced by the electric motor 108 drives the rotation of the hydraulic pump 112 that pumps fluid from one hydraulic actuating means to the other (from one hydraulic cylinder to the other), thus resulting in a tilting torque being exerted on the tilting arm 14. As it will become more apparent with the following description, applying a tilting torque to the tilting arm 14 results in the tilting frame 17 being tilted with respect to the tilting arm 14, thus resulting in the whole suspension module and the two wheels being tilted.

When the need arises to lock the tilting movement of the tilting module (for example at low speed or during parking of the vehicle implementing the tilting system), it is possible to close the intakes of the two hydraulic actuating means 102 and 101 by activating the isolation valve 105 so as to close the two ports connected to the hydraulic actuators. The two ports connected to the hydraulic pump may be connected together (as represented in the figure) . In this case, the right most part of the isolation valve 105 is used, so that the electric motor 108 is allowed to turn idle. It is also possible to short circuit all the hydraulic connections so that the tilting system is no longer actuated and can be controlled manually; in this case, the left most part of the isolation valve 105 is used.

It has to be noted that with the electromechanical layout depicted in figure 6, the hydraulic link between the hydraulic pump 112 and the hydraulic actuating means 102 and 101 is a direct link, i.e. no servo valves are needed. This solution allows the implementation of a fixed displacement hydraulic pump 112, namely a hydraulic pump (please explain in detail the functioning of a fixed displacement hydraulic pump). Accordingly, the tilting force or torque applied to the tilting arm 14 can be controlled by the torque of the electric motor 108. Moreover, the system can work with a fixed volume of fluid, the fluid reservoir 107 being needed just for compensating the unavoidable leakages.

It has, furthermore, to be noted that several amendments and/or modifications of the electromechanical layout depicted in figure 6 are possible, without departing from the scope of the present invention. For instance, hydraulic motors may be used instead of the two hydraulic cylinders 102 and 101. Moreover, the solution implementing more than one electric motor is also possible to achieve redundancy; in particular, to realize a hot redundant system, the hydraulic pump 112 maybe driven by a pair of electric motors, each providing a percentage of the total power needed (e.g. 80%). This, in particular, allows to run the system in the case of failure of one of the two motors, since if a failure occurs on an electric motor, the second electric motor can provide torque to actuate the hydraulic pump 112. Moreover, solutions are also possible implementing more than one power electronic units and/or more than one electronic control unit and/or more than one battery; in particular, using two power electronic units, two electronic control units and two batteries allows to realize a complete full redundant system, i.e. a system with redundancy of both the power supplies and the controls.

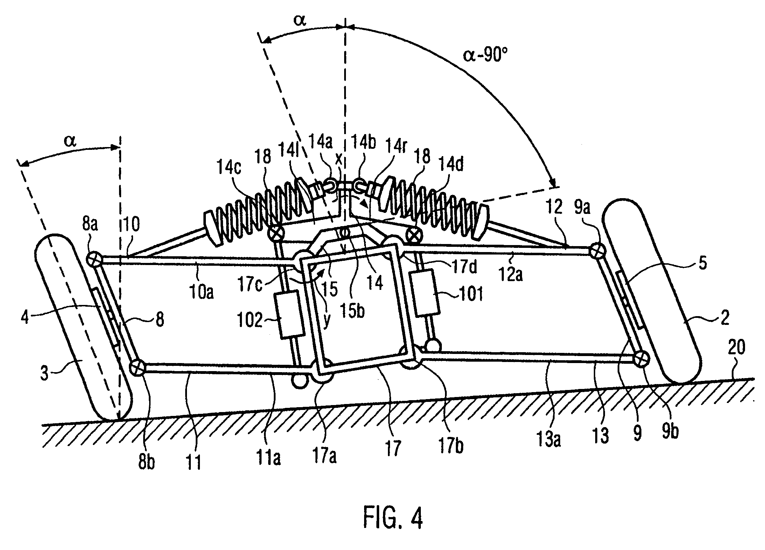

In the following, with reference to figure 4, a description will be given of the tilting behavior of the tilting module and system of figures 1, 2 and 3; again, in figure 4, those component parts already described with reference to previous figures are identified by the same reference numerals.

As soon as tilting of the vehicle implementing the tilting module and system depicted in figure 4 is required (for instance, during cornering of the vehicle) electrical current is supplied to the electric motor 108 (see figure 6); accordingly, the hydraulic pump 112 is driven, resulting in the hydraulic actuating means 102, 101 being also activated through the hydraulic pipes 104 and 103, respectively.

That means that a rotational impulse is given to the rotatable tilting arm 14. Assuming that said rotating impulse is such as to rotate the rotatable tilting arm 14 in the direction of rotation x depicted in figure 4, so as to tilt this toward the right in figure 4, a corresponding displacement impulse is given to the suspension structure through the shock absorbers 18. However, in view of the resistance exerted by the suspension structure, neither the tilting arm or crank 14 is tilted to the right nor the suspension structure is displaced into the same direction. However, the resistance exerted by the suspension structure results in a reverse torque arising, with said reverse torque acting on the rigid frame 17, resulting in said rigid frame 17 being rotated in a direction contrary to the direction x, namely in the direction y depicted in figure 4. Accordingly, the rigid frame 17 is rotated an angle α in the direction of rotation y as a function of the vertical displacement of the actuating means 102 and 101. As stated above, the support arms 10, 11, 12 and 13 are each pivotally connected to the rigid frame 17 through the pivotable connection 17a, 17b, 17c, 17d, 17e, 17f, 17g and 17h (see in particular figure 1). Moreover, the uprights 9 and 8 are pivotally connected to the suspension arms 12, 13 and 10, 11, respectively, through the further pivotable connections 9a, 9b, and 8a, 8b. Finally, the shock absorbers 18 are pivotally connected to the suspension arms 8 and 12 through corresponding pivotable connections 18b and 18a. Accordingly, the rotation of the rigid frame 17 of an angle α (see figure 4) results in the whole suspension structure being tilted as depicted in figure 4 together with the wheels 3 and 2 which, as depicted in figure 4 are also tilted of the same angle α. Obviously, the same considerations as stated above also apply in the case of a rotating impulse in the direction contrary to the direction x being given to the rotatable tilting crank 14; in this case, the suspension structure would be tilted in a corresponding contrary direction.

It results, therefore, from the above that the tilting module and system according to the present invention is an active tilting module and system, namely a module and system wherein the tilting function is obtained through the action of hydraulic actuating means which may comprise one or more electric motors driving one or more hydraulic pumps. Alternatively, the tilting module may even be actuated manually.

It has, moreover, to be appreciated that rotating the rigid frame 17 of an angle α as depicted in figure 4 results in the whole vehicle being tilted in the same angle α since the rigid frame 17 is adapted to be firmly fixed to the chassis or body of the vehicle; accordingly, the resultant of the gravity and the centrifugal forces acting on the vehicle is kept oriented along the vertical body axis of the vehicle, thus allowing to avoid or at least minimize the rollover risk even if the track of the vehicle is narrow when compared to that of conventional vehicles.

For the purpose of exploiting the tilting function, the vehicle implementing the tilting module and/or system according to the present invention may be equipped with sensing means adapted to collect data relating to the dynamic behavior of the vehicle so as to activate the electric motor 108 and the pump 112 in the case of the layout depicted in figure 6 as a function of the data collected. In particular, as stated above, said sensing means may be comprised in the electronic control unit 111 depicted in figure 6 and may be of the kind adapted to collect data relating to the lateral acceleration and/or forces of the vehicle. Accordingly, as soon as the vehicle approaches a curve or cornering and a driving action is exerted by the driver, the resulting lateral acceleration acting on the vehicle may be detected and measured and a corresponding signal may be sent to the power electronic unit 110 adapted to drive the electric motor 108, thus resulting in the vehicle being tilted so as to compensate the lateral acceleration felt by the vehicle. This solution, in particular, allows to compensate any lateral acceleration, i.e. also lateral acceleration arising in situation other than during cornering. For instance, in the case of lateral wind, also the resulting lateral acceleration acting on the vehicle can be detected and the vehicle can be tilted contrary to the lateral wind and also in the case of the vehicle traveling on a straight road.

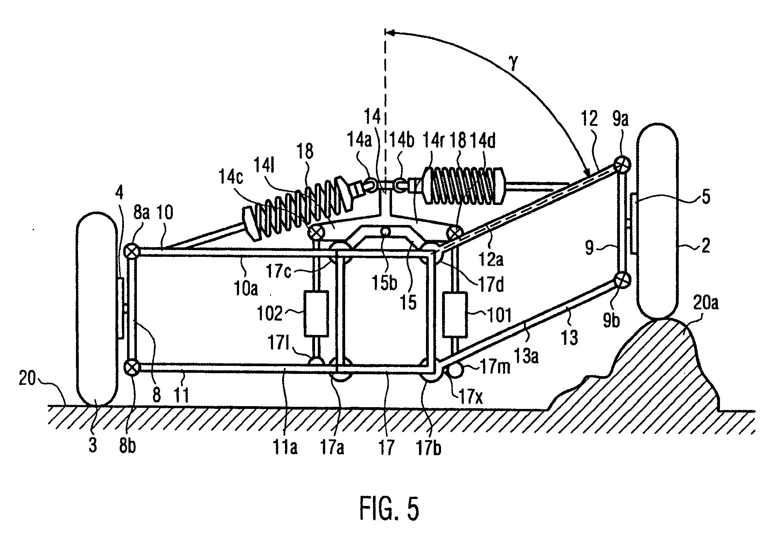

When one of the two wheels 2 and 3 crosses a bump, the tilting module and/or system according to the present invention behaves as depicted in figure 5, where like features depicted therein and already described with reference to previous figures are identified by like reference numerals.

In particular, in the example of figure 5, it is assumed that the wheel 2 crosses a bump 20a of the surface of the road 20; in this case, as depicted in figure 5, the tilting module and/or system does not work because the vertical displacement of the wheel 2 is absorbed by the shock absorber 18. In particular, this is due to the action exerted by the hydraulic actuators 102 and 101 on the tilting crank 14, which, in turn, is connected to the shock absorber 18 through the pivotable connection 14b and 14a (see figure 2). Accordingly, the crank 14 is not tilted as a consequence of the perturbation acting on the suspension structure but only the wheel 2 is lifted as depicted in figure 5. The rigid frame is therefore not rotated and the vehicle is not tilted.

Moreover, the way the vertical displacement of the wheel 2 is "absorbed" by the shock absorber 18 may be summarized as follows. As depicted in figure 5, a vertical displacement of the wheel 2 results in the suspension structure or system being also vertically displaced; accordingly, a force is exerted against the shock absorber 18 and a corresponding reaction or force is exerted by the shock absorber 18 on the suspension structure (and, therefore, on the wheel 2) contrary to the vertical displacement of the wheel, with said force varying in a linear manner as a function of the vertical displacement of the wheel 2. In other words, the resilient force exerted by the shock absorber 18 on both the suspension structure and the wheel 2 is proportional to the vertical displacement of the wheel 2. That means that high spring forces are exerted by the shock absorber 18 on the wheel 2 only in the case of large displacements of the wheel 2.

Although this behavior of the shock absorber 18 may be accepted in some circumstances, shock absorbing means with non-linear characteristics may be preferred in other circumstances such as, for example, in the case of light vehicles where the mass of the passengers and luggage is an important fraction of the overall mass of the vehicle. That is to say that shock absorbing means with a stiffness increasing with the load, i.e. with a stiffness increasing in a non-linear manner with the load may be preferred for the purpose of improving the comfort and the dynamic of the vehicle; in fact, shock absorbing means with a stiffness increasing with the load and/or the vertical displacement of the wheels may allow to keep the natural frequency of the suspended mass at a fairly constant value. Moreover, shock absorbing means with a stiffness increasing non-linearly or more than proportionally as a function of the vertical displacement of the wheels may allow to keep the vertical displacement of the wheels lower than a predefined value whilst this is not possible in the case of shock absorbing means where the stiffness is constant.

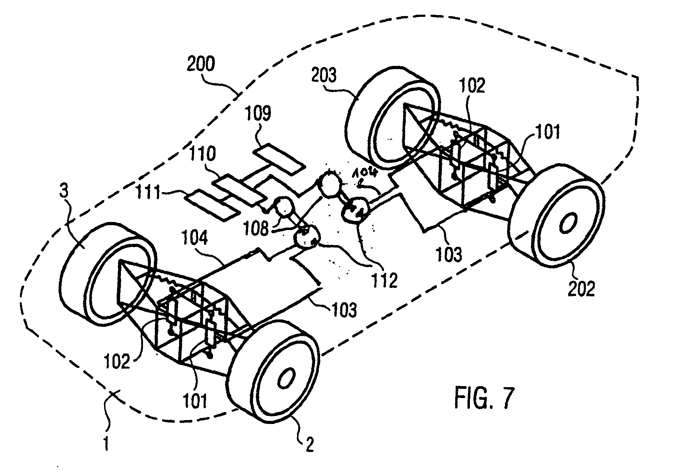

In the following, a first example of a vehicle implementing the suspension tilting module and system according to the present invention will be described with reference to figure 7, wherein, as usual, like features already described with reference to previous figures are identified by like reference numerals.

The vehicle 200 depicted in figure 7 is a four wheeled vehicle comprising two front wheels 2 and 3 disposed on a common front axle and two rear wheels 202 and 203 disposed on a common rear axle. Moreover, the vehicle 200 implements two suspension tilting modules according to the present invention namely a first tilting module supporting the front wheels 2 and 3 and a second tilting module supporting the rear wheels 202 and 203. Each of said tilting modules is equipped with hydraulic actuating means 102 and 101, the hydraulic actuating means 102 and 101 of each tilting module is hydraulically connected to one hydraulic pump 112 through corresponding hydraulic pipes 104 and 103. The two independent hydraulic pumps are driven by two independent electric motors 108 under the control of a power electronic unit 110 and an electronic control unit 111. Moreover, a battery 109 is provided, for supplying electrical power to the power electronic unit 110, the electronic control unit 111 and the electric motors 108. For example, the battery 109 may be the main battery of the vehicle; alternatively, the battery 109 may be an additional battery used in combination with the main battery of the vehicle.

The vehicle 200 may be of the kind comprising a main engine (not depicted in figure 7), for instance, a combustion engine. Alternatively, electric motors may be provided for the purpose of driving the wheels, for instance two electric motors received in the hubs of the front wheels 2 and 3. Alternatively, two electric motors may be received in the hubs of the rear wheels 202 and 203 or even four electric motors may be provided, received in the hubs of the four wheels 2, 3, 202 and 203.

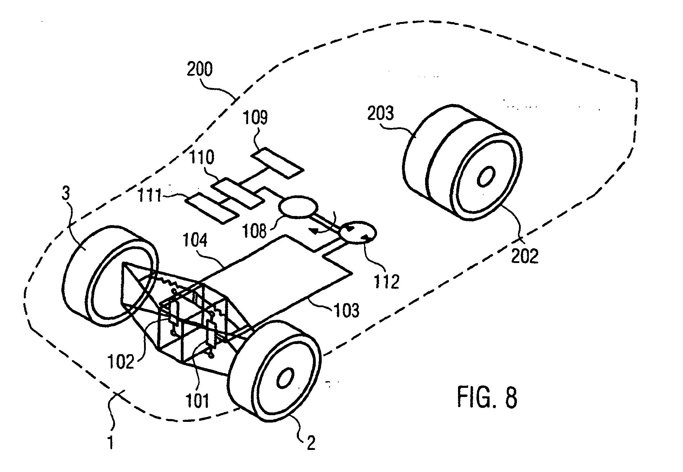

A further example of a vehicle implementing a suspension tilting module and system according to the present invention will be described with reference to figure 8, wherein, as usual, like features are identified by like reference numerals.

The main difference between the vehicle of figure 8 and that of figure 7 relates to the fact that the vehicle of figure 8 is a three wheeled vehicle; in particular, as depicted in figure 8, the two wheels 202 and 203 are placed adjacent to each other so as to form a single wheel. Alternatively, a single wheel may be used instead of the two adjacent wheels 202 and 203.

The same considerations as stated above with respect to the vehicle of figure 7 also apply to the vehicle of figure 8; in particular, additional hydraulic pumps, power electronic units, electronic control units and batteries may be implemented in the vehicle of figure 8, for instance for the purpose of obtaining power and electric control redundancy.

It has, therefore, been demonstrated that the suspension tilting module and system according to the present invention allow to overcome the problems or drawbacks affecting the prior art suspension tilting modules. In particular, the advantages offered by the suspension tilting module and system according to the present invention with respect to prior art suspension tilting module and systems may be summarized as follows.

The suspension tilting module and system according to the present invention have a very simple electromechanical and/or electro hydraulic layout, do not have transmission belts and no hydraulic control is needed;
a better optimization of the vehicle layout implementing the suspension tilting module and system according to the present invention is also possible due to the more compact layout with respect to purely mechanical or electro mechanical modules and systems;
there is no need of any mechanical link between the electric motor and the tilting mechanism, so that the electric motor and the hydraulic pump can be positioned at some distance from the hydraulic actuating means, thus allowing optimization of the overall assembly of the vehicle implementing them;
the overall mass of the tilting module and system according to the present invention is less than that of common electro mechanical tilting modules and systems;
in the module and system according to the present invention, less friction forces arise than in common suspension tilting modules and systems;
the control of the tilting torque can be made directly by controlling the current in the electric motor without any need for control valves;
the tilting module according to the present invention can be easily and quickly transformed in a manually actuated tilting module;
in the case of the tilting module and system according to the present invention, electromechanical layouts are possible offering high power and control redundancy, for instance implementing two hydraulic chains that work in parallel; accordingly, complete fully redundant systems may be provided;
the suspension tilting module according to the present invention is an active electro hydraulic tilting module working not only to break the tilting movement; and
the actuating tilting system according to the present invention can be regarded as a by-wire system as it only comprises electrical connections between the control signal coming from the driver or the electronic control unit and the electric motor.

## Claims

1. A suspension tilting module (1) for a wheeled vehicle (200) comprising at least two wheels (2, 3) disposed on a common axle, said module comprising a suspension system adapted to support said at least two wheels allowing tilting of said at least two wheels, said module comprising a rigid frame (17) adapted to be firmly fixed to the chassis of said vehicle (200) and pivotally supporting a tilting arm (14), said module further comprising hydraulic actuating means (101, 102) pivotally interposed between said rigid frame (17) and said tilting arm (14), so that activation of said hydraulic actuating means results in a force being exerted on said tilting arm (14) and said rigid frame (17) being tilted together with said at least two wheels,
**characterized in that**
said tilting arm (14) comprises at least a first and a second arm portion (141, 14r) and **in that** said hydraulic actuating means comprise at least a first hydraulic actuator (102) adapted to exert a force on said first arm portion (141), and a second hydraulic actuator (101) adapted to exert a force on said second arm portion (14r).

2. A module as claimed in claim 1,
**characterized in that**
said tilting arm (14) is pivotally connected to said rigid frame (17) through a pivotable connection (15b).

3. A module as claimed in one of claims 1 and 2,
**characterized in that**
said at least first hydraulic actuator (102) comprises a first end portion and a second end portion, said first end portion being pivotally connected to said first arm portion (141) through a pivotable connection (14c), said second end portion being pivotally connected to said rigid frame (17) through a pivotable connection (171).

4. A module as claimed in one of claims 1 to 3,
**characterized in that,**
said at least first hydraulic actuator (102) comprises an hydraulic cylinder.

5. A module as claimed in claim 4,
**characterized in that**
said hydraulic cylinder is a single effect hydraulic cylinder.

6. A module as claimed in one of claims 1 to 5,
**characterized in that**
said second hydraulic actuator (101) comprises a first end portion and a second end portion, said first end portion being pivotally connected to said second arm portion (14r) through a pivotable connection (14d), said second end portion being pivotally connected to said rigid frame (17) through a pivotable connection (17m).

7. A module as claimed in one of claims 1 to 6,
**characterized in that,**
said second hydraulic actuator (101) comprises an hydraulic cylinder.

8. A module as claimed in claim 7,
**characterized in that**
said hydraulic cylinder is a single effect hydraulic cylinder.

9. A module as claimed in one of claims 1 to 8,
**characterized in that**
it further comprises at least one hydraulic pump (112) hydraulically connected to said hydraulic actuating means (101,102).

10. A module as claimed in claim 9,
**characterized in that**
said hydraulic pump (112) is a fixed displacement hydraulic pump.

11. A module as claimed in one of claims 9 and 10,
**characterized in that**
it further comprises at least one electric motor (108) adapted to drive said at least one hydraulic pump (112).

12. A module as claimed in one of claims 9 to 11,
**characterized in that**
it further comprises at least one isolation valve (105) hydraulically interposed between said hydraulic actuating means (101, 102) and said at least one hydraulic pump (112) and adapted to close the intakes of said hydraulic actuating means (101, 102) so as to hydraulically isolate said hydraulic actuating means (101, 102) from said at least one hydraulic pump (112).

13. A module as claimed in one of claims 1 to 12,
**characterized in that**
said tilting arm (14) is pivotally connected to said suspension system through shock absorbers (18).

14. A module as claimed in claim 13,
**characterized in that**
said tilting arm (14) is pivotally connected to a first shock absorber and a second shock absorber through pivotable connections (14a) and (14b), respectively.

15. A module as claimed in claim 8 when referred back to one of claims 1 to 14,
**characterized in that**
said rigid frame (17) is pivotally connected to suspension arms (10, 11, 12, 13) of said suspension system, with said suspension arms (10, 11, 12, 13) supporting said at least two wheels (2, 3) so that activation of said hydraulic actuating means (101, 102) results in said rigid frame being tilted together with said at least two wheels.

16. A module as claimed in claim 15,
**characterized in that**
said suspension arms comprise a first upper arm (12) and a first lower arm (13) adapted to pivotally support , in combination, a first wheel (2) of said at least two wheels, as well as a second upper arm (10) and a second lower arm (11) adapted to pivotally support, in combination, a second wheel (3) of said at least two wheels so as to allow tilting of said first and second wheels (2, 3).

17. A module as claimed in claim 16,
**characterized in that**
said suspension system comprises a first upright (9) pivotally connected to both said first upper arm (12) and said first lower arm (13) and adapted to support a first wheel (2) of said at least two wheels, as well as a second upright (8) pivotally connected to both said second upper arm (10) and said second lower arm (11) and adapted to support a second wheel (3) of said at least two wheels, said first and second uprights (9, 8) allowing steering of said first and second wheels on corresponding steering axes substantially vertical and being adapted to be tilted together with said first and second wheels, respectively.

18. A module as claimed in claim 17,
**characterized in that**
said first upright (9) comprises a first upper pivotable connection (9a) pivotally connecting said first upright (9) to said first upper arm (12) and a first lower pivotable connection (9b) pivotally connecting said first upright (9) to said first lower arm (13) and **in that** said second upright (8) comprises a second upper pivotable connection (8a) pivotally connecting said second upright (8) to said second upper arm (10) and a second lower pivotable connection (8b) pivotally connecting said second upright (8) to said second lower arm (10), said first upper and lower pivotable connections (9a, 9b) allowing both tilting and steering of said first upright (9), said second upper and lower pivotable connections (8a, 8b) allowing both tilting and steering of said second upright (8).

19. A driving tilting suspension system for a wheeled vehicle (200) comprising at least two wheels (2, 3) disposed on a common axle, said system being
**characterized in that**
it comprises a suspension tilting module as claimed in one of claims 1 to 18 and two wheels (2, 3) rotatably connected to said module.

20. A system as claimed in claim 19,
**characterized in that**
said system further comprises at least electronic control unit (110) adapted to collect data relating to the driving condition and/or the behavior of said vehicle and to emit electrical signals as a result of the collected data.

21. A system as claimed in claim 20,
**characterized in that**
it further comprises means (111) adapted to collect said electrical signals and to drive said hydraulic actuating means as a function of the electrical signals as collected.

22. A system as claimed in claim 21,
**characterized in that**
said means (111) adapted to collect said electrical signals comprise at least one electronic control unit electrically connected to said sensing unit (110) and to said hydraulic actuating means.

23. A system as claimed in claim 22, when appended to one of claims 11 to 18,
**characterized in that**
said electronic control unit is electrically connected to said at least one electric motor (108) so as to drive said at least one electric motor (108) as a function of the electrical signals as collected.

24. A wheeled vehicle comprising at least two wheels (2, 3),
**characterized in that**
said vehicle is equipped with a driving tilting suspension system as claimed in one of claims 19 to 23.

25. A vehicle as claimed in claim 24,
**characterized in that**
said vehicle is three wheel vehicle comprising two front wheels (2, 3) and one rear wheel, and **in that** said vehicle comprises a front system as claimed in one of claims 21 to 25, said two front wheels (2, 3) being rotatably supported by suspension module of said front system.

26. A vehicle as claimed in claim 24,
**characterized in that**
said vehicle is a four wheeled comprising two front wheels (2, 3) and two rear wheels (202, 203), and **in that** said vehicle comprises a rear and a front system as claimed in one of claims 21 to 26, with said rear wheels being rotatably supported by said suspension module of said rear system and the front wheels being rotatably supported by the suspension module of said front system.

27. A vehicle as claimed in claim 24,
**characterized in that**
said vehicle is a four wheeled vehicle comprising two front wheels (2, 3) and two rear wheels (202, 203), either the front wheels or the rear wheels being driven by a main engine, and **in that** the two wheels not driven by said main engine are rotatably supported by said suspension module of said system.

28. A vehicle as claimed in on of claims 24 to 27,
**characterized in that**
it further comprises a fluid reservoir (107) containing an hydraulic fluid, said reservoir being hydraulically connected to said hydraulic actuating means (101, 102).

29. A vehicle as claimed in one of claims 24 to 28,
**characterized in that**
it further comprises electrical power storage means electrically connected to said hydraulic actuating means of said module.

30. A vehicle as claimed in claim 29,
**characterized in that**
said electrical power storage means comprise the main battery of said vehicle.

## Patentansprüche

1. Aufhängungs-Neigemodul (1) für ein Radfahrzeug (200), das wenigstens zwei Räder (2, 3) umfasst, die an einer gemeinsamen Achse angeordnet sind, wobei das Modul ein Aufhängungssystem umfasst, das so eingerichtet ist, dass es die wenigstens zwei Räder trägt und Neigen der wenigstens zwei Räder zulässt, wobei das Modul einen starren Rahmen (17) umfasst, der so eingerichtet ist, dass er fest an dem Chassis des Fahrzeugs (200) angebracht wird und einen Neigearm (14) schwenkbar trägt, das Modul des Weiteren hydraulische Betätigungseinrichtungen (101, 102) umfasst, die schwenkbar zwischen dem starren Rahmen (17) und dem Neigearm (14) so angeordnet sind, dass Betätigung der Hydraulik-Betätigungseinrichtungen bewirkt, dass eine Kraft auf den Neigearm (14) ausgeübt wird und der starre Rahmen (14) zusammen mit den wenigstens zwei Rädern geneigt wird,
**dadurch gekennzeichnet, dass**
der Neigearm (14) wenigstens einen ersten und einen zweiten Armabschnitt (14l, 14r) umfasst, und dass die hydraulischen Betätigungseinrichtungen wenigstens ein erstes hydraulisches Betätigungselement (102), das so eingerichtet ist, dass es eine Kraft auf den ersten Armabschnitt (14l) ausübt, sowie ein zweites hydraulisches Betätigungselement (101) umfasst, das so eingerichtet ist, dass es eine Kraft auf den zweiten Armabschnitt (14r) ausübt.

2. Modul nach Anspruch 1,
**dadurch gekennzeichnet, dass**
der Neigearm (14) über eine Schwenkverbindung (15b) schwenkbar mit dem starren Arm (17) verbunden ist.

3. Modul nach einem der Ansprüche 1 und 2,
**dadurch gekennzeichnet, dass**
das wenigstens eine hydraulische Betätigungselement (102) einen ersten Endabschnitt sowie einen zweiten Endabschnitt umfasst, wobei der erste Endabschnitt über eine Schwenkverbindung (14c) schwenkbar mit dem ersten Armabschnitt (14l) verbunden ist und der zweite Endabschnitt über eine Schwenkverbindung (17l) schwenkbar mit dem starren Rahmen (17) verbunden ist.

4. Modul nach einem der Ansprüche 1 bis 3,
**dadurch gekennzeichnet, dass**
das wenigstens erste hydraulische Betätigungselement (102) einen Hydraulikzylinder umfasst.

5. Modul nach Anspruch 4,
**dadurch gekennzeichnet, dass**
der Hydraulikzylinder ein einfach wirkender Hydraulikzylinder ist.

6. Modul nach einem der Ansprüche 1 bis 5,
**dadurch gekennzeichnet, dass**
das zweite hydraulische Betätigungselement (101) einen ersten Endabschnitt und einen zweiten Endabschnitt umfasst, wobei der erste Endabschnitt über eine Schwenkverbindung (14d) schwenkbar mit dem zweiten Armabschnitt (14r) verbunden ist und der zweite Endabschnitt über eine Schwenkverbindung (17m) schwenkbar mit dem starren Rahmen (17) verbunden ist.

7. Modul nach einem der Ansprüche 1 bis 6,
**dadurch gekennzeichnet, dass**
das zweite hydraulische Betätigungselement (101) einen Hydraulikzylinder umfasst.

8. Modul nach Anspruch 7,
**dadurch gekennzeichnet, dass**
der Hydraulikzylinder ein einfach wirkender Hydraulikzylinder ist.

9. Modul nach einem der Ansprüche 1 bis 8,
**dadurch gekennzeichnet, dass**
es des Weiteren wenigstens eine Hydraulikpumpe (112) umfasst, die hydraulisch mit der hydraulischen Betätigungseinrichtung (101, 102) verbunden ist.

10. Modul nach Anspruch 9,
**dadurch gekennzeichnet, dass**
die Hydraulikpumpe (112) eine Konstant-Hydraulikpumpe ist.

11. Modul nach einem der Ansprüche 9 und 10,
**dadurch gekennzeichnet, dass**
es des Weiteren wenigstens einen Elektromotor (108) umfasst, der so eingerichtet ist, dass er die wenigstens eine Hydraulikpumpe (112) antreibt.

12. Modul nach einem der Ansprüche 9 bis 11,
**dadurch gekennzeichnet, dass**
es des Weiteren wenigstens ein Isolierventil (105) umfasst, das hydraulisch zwischen den hydraulischen Betätigungseinrichtungen (101, 102) und der wenigstens einen Hydraulikpumpe (112) angeordnet und so eingerichtet ist, dass es die Einlässe der hydraulischen Betätigungseinrichtungen (101, 102) schließt, um die hydraulischen Betätigungseinrichtungen (101, 102) hydraulisch von der wenigstens einen Hydraulikpumpe (112) zu isolieren.

13. Modul nach einem der Ansprüche 1 bis 12,
**dadurch gekennzeichnet, dass**
der Neigearm (14) über Stoßdämpfer (18) schwenkbar mit dem Aufhängungssystem verbunden ist.

14. Modul nach Anspruch 13,
**dadurch gekennzeichnet, dass**
der Neigearm (14) über Schwenkverbindungen (14a und 14b) schwenkbar mit einem ersten Stoßdämpfer bzw. einem zweiten Stoßdämpfer verbunden ist.

15. Modul nach Anspruch 8, wenn bezogen auf einen der Ansprüche 1 bis 14,
**dadurch gekennzeichnet, dass**
der starre Rahmen (17) schwenkbar mit Aufhängungsarmen (10, 11, 12, 13) des Aufhängungssystems verbunden ist, wobei die Aufhängungsarme (10, 11, 12, 13) die wenigstens zwei Räder (2, 3) so tragen, dass Betätigung der hydraulischen Betätigungseinrichtungen (101, 102) bewirkt, dass der starre Rahmen zusammen mit den wenigstens zwei Rädern geneigt wird.

16. Modul nach Anspruch 15,
**dadurch gekennzeichnet, dass**
die Aufhängungsarme einen ersten oberen Arm (12) und einen ersten unteren Arm (13), die so eingerichtet sind, dass sie zusammen ein erstes Rad (2) der wenigstens zwei Räder schwenkbar tragen, sowie einen zweiten oberen Arm (10) und einen zweiten unteren Arm (11) umfassen, die so eingerichtet sind, dass sie zusammen ein zweites Rad (3) der wenigstens zwei Räder schwenkbar tragen, um Neigen des ersten und des zweiten Rades (2, 3) zu ermöglichen.

17. Modul nach Anspruch 16,
**dadurch gekennzeichnet, dass**
das Aufhängungssystem eine erste Stütze (9), die schwenkbar sowohl mit dem ersten oberen Arm (12) als auch dem ersten unteren Arm (13) verbunden und so eingerichtet ist, dass sie ein erstes Rad (2) der wenigstens zwei Räder trägt, sowie eine zweite Stütze (8) umfasst, die schwenkbar sowohl mit dem zweiten oberen Arm (10) als auch dem zweiten unteren Arm (11) verbunden und so eingerichtet ist, dass sie ein zweites Rad (3) der wenigstens zwei Räder trägt, wobei die erste und die zweite Stütze (9, 8) Lenken des ersten und des zweiten Rades an entsprechenden Lenkachsen im Wesentlichen vertikal ermöglichen und sie so eingerichtet sind, dass sie zusammen mit dem ersten bzw. dem zweiten Rad geneigt werden.

18. Modul nach Anspruch 17,
**dadurch gekennzeichnet, dass**
die erste Stütze (9) eine erste obere Schwenkverbindung (9a) umfasst, die die erste Stütze (9) schwenkbar mit dem ersten oberen Arm (12) verbindet, sowie eine erste untere Schwenkverbindung (9b) umfasst, die die erste Stütze (9) schwenkbar mit dem ersten unteren Arm (13) verbindet, und, dass die zweite Stütze (8) eine zweite obere Schwenkverbindung (8a), die die zweite Stütze (8) schwenkbar mit dem zweiten oberen Arm (10) verbindet, sowie eine zweite untere Schwenkverbindung (8b) umfasst, die die zweite Stütze (8) schwenkbar mit dem zweiten unteren Arm (10) verbindet, wobei die erste obere und die erste untere Schwenkverbindung (9a, 9b) sowohl Neigen als auch Lenken der ersten Stütze (9) ermöglichen, und die zweite obere sowie die zweite untere Schwenkverbindung (8a, 8b) sowohl Neigen als auch Lenken der zweiten Stütze (8) ermöglichen.

19. Antriebs-Neige-Aufhängungssystem für ein Radfahrzeug (200), das wenigstens zwei Räder (2, 3) umfasst, die auf einer gemeinsamen Achse angeordnet sind, wobei das System **dadurch gekennzeichnet ist, dass**
es ein Aufhängungs-Neigemodul nach einem der Ansprüche 1 bis 18 und zwei Räder (2, 3) umfasst, die drehbar mit dem Modul verbunden sind.

20. System nach Anspruch 19,
**dadurch gekennzeichnet, dass**
das System des Weiteren wenigstens eine elektronische Steuereinheit (110) umfasst, die so eingerichtet ist, dass sie Daten erfasst, die sich auf den Fahrzustand und/oder das Verhalten des Fahrzeugs beziehen, und als Ergebnis der erfassten Daten elektrische Signale ausgibt.

21. System nach Anspruch 20,
**dadurch gekennzeichnet, dass**
es des Weiteren eine Einrichtung (111) umfasst, die so eingerichtet ist, dass sie die elektrischen Signale erfasst und die hydraulischen Betätigungseinrichtungen in Abhängigkeit von den erfassten elektrischen Signale ansteuert.

22. System nach Anspruch 21,
**dadurch gekennzeichnet, dass**
die Einrichtung (111), die so eingerichtet ist, dass sie die elektrischen Signale erfasst, wenigstens eine elektronische Steuereinheit umfasst, die elektrisch mit der Messeinheit (110) und den hydraulischen Betätigungseinrichtungen verbunden ist.

23. System nach Anspruch 22, wenn abhängig von einem der Ansprüche 11 bis 18,
**dadurch gekennzeichnet, dass**
die elektronische Steuereinheit elektrisch mit dem wenigstens einen Elektromotor (108) verbunden ist, um den wenigstens einen Elektromotor (108) in Abhängigkeit von den erfassten elektrischen Signalen anzutreiben.

24. Radfahrzeug, das wenigstens zwei Räder (2, 3) umfasst,
**dadurch gekennzeichnet, dass**
das Fahrzeug mit einem antreibenden Neige-Aufhängungssystem nach einem der Ansprüche 19 bis 23 ausgestattet ist.

25. Fahrzeug nach Anspruch 24,
**dadurch gekennzeichnet, dass**
das Fahrzeug ein Dreiradfahrzeug ist, das zwei Vorderräder (2, 3) und ein Hinterrad umfasst, und **dadurch**, dass das Fahrzeug ein vorderes System nach einem der Ansprüche 21 bis 25 umfasst, wobei die zwei Vorderräder (2, 3) von einem Aufhängungsmodul des vorderen Systems drehbar getragen werden.

26. Fahrzeug nach Anspruch 24,
**dadurch gekennzeichnet, dass**
das Fahrzeug ein Vierradfahrzeug ist, das zwei Vorderräder (2, 3) und zwei Hinterräder (202, 203) umfasst, und **dadurch**, dass das Fahrzeug ein hinteres sowie ein vorderes System nach einem der Ansprüche 21 bis 26 umfasst, wobei die Hinterräder drehbar von dem Aufhängungsmodul des hinteren Systems getragen werden und die Vorderräder (2, 3) drehbar von dem Aufhängungsmodul des vorderen Systems getragen werden.

27. Fahrzeug nach Anspruch 24,
**dadurch gekennzeichnet, dass**
das Fahrzeug ein Vierradfahrzeug ist, das zwei Vorderräder (2, 3) und zwei Hinterräder (202, 203) umfasst, wobei entweder die Vorderräder oder die Hinterräder von einem Hauptmotor angetrieben werden, und **dadurch**, dass die zwei Räder, die nicht von dem Hauptmotor angetrieben werden, von dem Aufhängungsmodul des Systems drehbar getragen werden.

28. Fahrzeug nach einem der Ansprüche 24 bis 27,
**dadurch gekennzeichnet, dass**
es des Weiteren einen Fluid-Vorratsbehälter (107) umfasst, der ein Hydraulikfluid enthält, wobei der Vorratsbehälter hydraulisch mit den hydraulischen Betätigungseinrichtungen (101, 102) verbunden ist.

29. Fahrzeug nach einem der Ansprüche 24 bis 28,
**dadurch gekennzeichnet, dass**
es des Weiteren eine Elektroenergie-Speichereinrichtung umfasst, die elektrisch mit den hydraulischen Betätigungseinrichtungen des Moduls verbunden ist.

30. Fahrzeug nach Anspruch 29,
**dadurch gekennzeichnet, dass**
die Elektroenergie-Speichereinrichtung die Hauptbatterie des Fahrzeugs umfasst.

## Revendications

1. Module de suspension basculant (1) pour un véhicule à roues (200) comprenant au moins deux roues (2, 3) disposées sur un essieu commun, ledit module comprenant un système de suspension adapté pour soutenir lesdites roues en permettant le basculement d'au moins deux roues, ledit module comprenant un cadre rigide (17) conçu pour être fermement fixé au châssis dudit véhicule (200) et soutenant de manière pivotante un bras basculant (14), ledit module comprenant de plus un moyen d'actionnement hydraulique (101, 102) interposé de manière pivotante entre ledit cadre rigide (17) et ledit bras basculant (14), de sorte que l'actionnement dudit moyen d'actionnement hydraulique entraîne l'exercice d'une force sur ledit bras basculant (14) et le basculement dudit cadre rigide (17) avec lesdites roues,
**caractérisé en ce que**
ledit bras basculant (14) comprend au moins une première et une seconde partie de bras (141, 14r) et **en ce que** ledit moyen d'actionnement hydraulique comprend au moins un premier actionneur hydraulique (102) conçu pour exercer une force sur ladite première partie de bras (141), et un second actionneur hydraulique (101) conçu pour exercer une force sur ladite seconde partie de bras (14r).

2. Module selon la revendication 1,
**caractérisé en ce que**
ledit bras basculant (14) est relié de manière pivotante audit cadre rigide (17) par le biais d'une liaison pivotante (15b).

3. Module selon l'une des revendications 1 et 2,
**caractérisé en ce que**
au moins le premier actionneur hydraulique (102) comprend une première partie d'extrémité et une seconde partie d'extrémité, ladite première partie d'extrémité étant reliée de manière pivotante à ladite première partie de bras (141) par le biais d'une liaison pivotante (14c), ladite seconde partie d'extrémité étant reliée de manière pivotante audit cadre rigide (17) par l'intermédiaire d'une liaison pivotante (171).

4. Module selon l'une des revendications 1 à 3,
**caractérisé en ce que,**
au moins le premier actionneur hydraulique (102) comprend un vérin hydraulique.

5. Module selon la revendication 4,
**caractérisé en ce que**
ledit vérin hydraulique est un vérin hydraulique simple effet.

6. Module selon l'une des revendications 1 à 5,
**caractérisé en ce que**
ledit second actionneur hydraulique (101) comprend une première partie d'extrémité et une seconde partie d'extrémité, ladite première partie d'extrémité étant reliée de manière pivotante à ladite seconde partie de bras (14r) par le biais d'une liaison pivotante (14d), ladite seconde partie d'extrémité étant reliée de manière pivotante audit cadre rigide (17) par l'intermédiaire d'une liaison pivotante (17m).

7. Module selon l'une des revendications 1 à 6,
**caractérisé en ce que,**
ledit second actionneur hydraulique (101) comprend un vérin hydraulique.

8. Module selon la revendication 7,
**caractérisé en ce que**
ledit vérin hydraulique est un vérin hydraulique simple effet.

9. Module selon l'une des revendications 1 à 8,
**caractérisé en ce que**
il comprend de plus au moins une pompe hydraulique (112) en liaison hydraulique avec ledit moyen d'actionnement hydraulique (101, 102).

10. Module selon la revendication 9,
**caractérisé en ce que**
ladite pompe hydraulique (112) est une pompe hydraulique à débit constant.

11. Module selon l'une des revendications 9 et 10,
**caractérisé en ce que**
il comprend de plus au moins un moteur électrique (108) conçu pour entraîner ladite au moins une pompe hydraulique (112).

12. Module selon l'une des revendications 9 à 11,
**caractérisé en ce que**
il comprend de plus au moins une vanne d'isolement (105) interposée de manière hydraulique entre ledit moyen d'actionnement hydraulique (101, 102) et ladite pompe hydraulique (112) et conçue pour fermer les entrées dudit moyen d'actionnement hydraulique (101, 102) afin d'isoler hydrauliquement ledit moyen d'actionnement (101, 102) de ladite pompe hydraulique (112).

13. Module selon l'une des revendications 1 à 12,
**caractérisé en ce que**
ledit bras basculant (14) est relié de manière pivotante audit système de suspension par l'intermédiaire d'amortisseurs (18).

14. Module selon la revendication 13,
**caractérisé en ce que**
ledit bras basculant (14) est relié de manière pivotante à un premier amortisseur et à un second amortisseur, respectivement, par le biais de liaisons pivotantes (14a) et (14b).

15. Module selon la revendication 8 faisant référence à l'une des revendications 1 à 14,
**caractérisé en ce que**
ledit cadre rigide (17) est relié de manière pivotante aux bras de suspension (10, 11, 12, 13) dudit système de suspension, lesdits bras de suspension (10, 11, 12, 13) soutenant lesdites roues (2, 3) de sorte que l'actionnement dudit moyen d'actionnement hydraulique (101, 102) entraîne le basculement dudit cadre rigide avec lesdites roues.

16. Module selon la revendication 15,
**caractérisé en ce que**
lesdits bras de suspension comprennent un premier bras supérieur (12) et un premier bras inférieur (13) conçus pour soutenir de manière pivotante, en association, une première roue (2) ainsi qu'un second bras supérieur (10) et un second bras inférieur (11) conçus pour soutenir de manière pivotante, en association, une seconde roue (3) afin de permettre le basculement desdites première et seconde roues (2, 3).

17. Module selon la revendication 16,
**caractérisé en ce que**
ledit système de suspension comprend un premier montant (9) relié de manière pivotante au premier bras supérieur (12) et au premier bras inférieur (13) et conçu pour soutenir une première roue (2) ainsi qu'un second montant (8) relié de manière pivotante au second bras supérieur (10) et au second bras inférieur (11) et conçu pour soutenir une seconde roue (3), lesdits premier et second montants (9, 8) permettant de braquer lesdites première et seconde roues sur des axes de braquage correspondants sensiblement verticaux et étant conçus pour être basculés avec, respectivement, lesdites première et seconde roues.

18. Module selon la revendication 17,
**caractérisé en ce que**
ledit premier montant (9) comprend une première liaison pivotante supérieure (9a) reliant de manière pivotante ledit premier montant (9) audit premier bras supérieur (12) et une première liaison pivotante inférieure (9b) reliant de manière pivotante ledit premier montant (9) audit premier bras inférieur (13), et **en ce que** ledit second montant (8) comprend une seconde liaison pivotante supérieure (8a) reliant de manière pivotante ledit second montant (8) audit second bras supérieur (10) et une seconde liaison pivotante inférieure (8b) reliant de manière pivotante ledit second montant (8) audit second bras inférieur (10), lesdites premières liaisons pivotantes supérieure et inférieure (9a, 9b) permettant à la fois le basculement et le braquage dudit premier montant (9), lesdites secondes liaisons pivotantes supérieure et inférieure (8a, 8b) permettant à la fois le basculement et le braquage dudit second montant (8).

19. Système de conduite à suspension basculante pour un véhicule à roues (200) comprenant au moins deux roues (2, 3) disposées sur un essieu commun, ledit système étant
**caractérisé en ce que**
il comprend un module de suspension basculant selon l'une des revendications 1 à 18 et deux roues (2, 3) reliées de manière rotative audit module.

20. Système selon la revendication 19,
**caractérisé en ce que**
ledit système comprend de plus au moins une unité de commande électronique (110) conçue pour collecter des données relatives aux conditions de conduite et/ou au comportement dudit véhicule et pour émettre des signaux électriques en fonction des données collectées.

21. Système selon la revendication 20,
**caractérisé en ce que**
il comprend de plus un moyen (111) conçu pour collecter lesdits signaux électriques et entraîner ledit moyen d'actionnement hydraulique en fonction des signaux électriques collectés.

22. Système selon la revendication 21,
**caractérisé en ce que**
ledit moyen (111) conçu pour collecter lesdits signaux électriques comprend au moins une unité de commande électronique reliée de manière électrique à ladite unité de détection (110) et audit moyen d'actionnement hydraulique.

23. Système selon la revendication 22, faisant référence à l'une des revendications 11 à 18,
**caractérisé en ce que**
ladite unité de commande électronique est reliée de manière électrique audit moteur électrique (108) afin d'entraîner ledit moteur électrique (108) en fonction des signaux électriques collectés.

24. véhicule à roues comprenant au moins deux roues (2, 3),
**caractérisé en ce que**
ledit véhicule est équipé d'un système de conduite à suspension basculante selon l'une des revendications 19 à 23.

25. Véhicule selon la revendication 24,
**caractérisé en ce que**
ledit véhicule est un véhicule à trois roues comprenant deux roues avant (2, 3) et une roue arrière, et **en ce que** ledit véhicule comprend un système avant selon l'une des revendications 21 à 25, lesdites deux roues avant (2, 3) étant supportées de manière rotative par le module de suspension dudit système avant.

26. Véhicule selon la revendication 24,
**caractérisé en ce que**
ledit véhicule est un véhicule à quatre roues comprenant deux roues avant (2, 3) et deux roues arrière (202, 203), et **en ce que** ledit véhicule comprend un système arrière et avant selon l'une des revendications 21 à 26, lesdites roues arrière étant supportées de manière rotative par ledit module de suspension dudit système arrière et lesdites roues avant étant supportées de manière rotative par ledit module de suspension dudit système avant.

27. Véhicule selon la revendication 24,
**caractérisé en ce que**
ledit véhicule est un véhicule à quatre roues comprenant deux roues avant (2, 3) et deux roues arrière (202, 203), les roues avant ou les roues arrière étant entraînées par un moteur principal, et **en ce que** les deux roues non entraînées par ledit moteur principal sont supportées de manière rotative par ledit module de suspension dudit système.

28. Véhicule selon l'une des revendications 24 à 27,
**caractérisé en ce que**
il comprend de plus un réservoir de fluide (107) contenant un fluide hydraulique, ledit réservoir étant relié de manière hydraulique audit moyen d'actionnement hydraulique (101, 102).

29. Véhicule selon l'une des revendications 24 à 28,
**caractérisé en ce que**
il comprend de plus un moyen de stockage d'énergie électrique relié de manière électrique audit moyen d'actionnement hydraulique dudit module.

30. Véhicule selon la revendication 29,
**caractérisé en ce que**
ledit moyen de stockage d'énergie électrique comprend la batterie principale dudit véhicule.
